# EUROPEAN PATENT SPECIFICATION

(11) **EP 3 618 142 B1**
(45) Date of publication and mention of the grant of the patent: **17.02.2021**
(21) Application number: 18191858.2
(22) Date of filing: 30.08.2018
(51) Int. Cl.: H01M 2/10, B60L 3/00, B60L 3/04, H01M 2/34, H01M 10/42, H02B 1/42

(54) **SERVICE DISCONNECT AND GROUNDING CONCEPT FOR A BATTERY STORAGE SYSTEM**
DIENSTTRENNUNGS- UND ERDUNGSKONZEPT FÜR EIN BATTERIESPEICHERSYSTEMS
CONCEPT DE MISE À LA TERRE ET DE DÉCONNEXION DE SERVICE POUR SYSTÈME DE STOCKAGE DE BATTERIE

(43) Date of publication of application: 04.03.2020
(73) Proprietor: ABB Schweiz AG, 5400 Baden (CH)
(72) Inventor: Meyer, Francesca, 8006 Zürich (CH); Wicki, Stefan, 5702 Niederlenz (CH); Pfister, Stefan, 8953 Dietikon (CH)
(74) Representative: Qip Patentanwälte Dr. Kuehn & Partner mbB

(56) References cited:
- EP-A1- 2 006 971
- WO-A1-2010/000308
- DE-A1-102014 018 392
- US-A1- 2012 125 746
- US-B2- 9 130 405

## Description

### FIELD OF THE INVENTION

The invention relates to a battery storage system and to a transportation vehicle with such a battery storage system.

### BACKGROUND OF THE INVENTION

Electric batteries, which are usually composed of a plurality of battery cells, are increasingly used in transportation applications. Due to the high power and energy of the battery storage system in such applications, it may be beneficial to add auxiliary electrical components to the battery cells to increase performance, lifetime, and safety of the battery storage system. Typical auxiliary electrical components, which are added to the battery cells, are, for example, contactors, disconnectors, fuses, current and voltage sensors and/or control boards.

Unlike systems powered solely from an electrical grid, energy is intrinsically contained in the battery cells, therefore servicing and replacement of parts may be generally more difficult, since service personnel may be exposed to electrical voltage during work. On the other hand, service work should be as simple as possible with good accessibility of the parts and time consuming intermediate steps are not desired. The servicing of auxiliary electrical components within the battery storage system has to be safely guaranteed for servicing personnel.

Additionally, the battery potential as well as energy content may be very high, which may increase the difficulty of servicing of the battery cells, for example, when battery cells have to be replaced. The increased battery potential automatically may increase the necessary protection equipment and may make servicing more costly and time consuming.

DE 10 2014 018 392 A1 refers to an electric vehicle and shows a device for disconnecting an electric storage with batteries from electrical components via two switch devices.

EP 2 006 971 A1 relates to a power storage apparatus for an electric rolling stock, which comprises series connected batteries, which supply a converter. Supply lines from the batteries to the converter and an intermediate line between batteries can be disconnected with switches controlled by a control device.

### DESCRIPTION OF THE INVENTION

It is an objective of the invention to increase the electrical protection of components of a battery storage system. It is a further objective of the invention to better protect service personnel of the battery storage system.

These objectives are achieved by the subject-matter of the independent claims. Further exemplary embodiments are evident from the dependent claims and the following description.

An aspect of the invention relates to a battery storage system. A battery storage system may comprise a plurality of electrically interconnected battery cells and further electric equipment for charging, discharging and/or controlling the battery cells.

The battery storage system may be designed for high-power applications and/or for high-energy applications, such as transportation and/or power quality. Here, high power may refer to currents of more than 10 A and/or voltages of more than 60 V.

According to an embodiment of the invention, the battery storage system comprises a battery compartment, an electrical component compartment and a disconnector compartment. All these compartments may be mechanically interconnected and/or may have a common frame. They all may be provided as separated parts of a cabinet. Each compartment may be accessible by a separate door, which prevents access to the components in the interior of the compartment, in particular, when they are on potential. When the respective door is closed, the components in each compartment may be protected from being touched by a person.

The battery compartment accommodates a plurality of battery cells. These battery cells may be electrically connected in series and/or in parallel and may store the electrical energy provided by the battery storage system. Here and in the following, "accommodated" may mean that the battery cells are mechanically connected to the interior of the compartment.

The electrical component compartment accommodates electrical components electrically connectable with the battery cells. For example, the battery cells may be connected to electrical components such as connectors, sensors, resistors, fuses, etc. In general, the electrical components in the electrical component compartment may comprise components that may have to be maintained and/or exchanged more often than the battery cells. Here and in the following, "accommodated" may mean that the electrical components are mechanically connected to the interior of the compartment.

The disconnector is adapted for electrically connecting the electrical components to the battery cells and for electrically disconnecting the electrical components from the battery cells. The disconnector may be located outside of the battery compartment and the electrical component compartment and/or the disconnector may be accommodated in a further compartment. The disconnector comprises mechanical switches, which may be actuated manually. The disconnector may provide a separation of contacts, for example after the circuit already was opened by a switch before. The switches may be connected, such that they solely can be simultaneously switched.

According to the invention, the disconnector comprises at least three mechanical switches, which are coupled with each other to be switched simultaneously. In such a way, all components connected with each other via the disconnector may be galvanically separated from each other. Furthermore, not only the lines interconnecting the battery cells with the electrical components may be disconnected, but also further connections, such as lines internally connecting the battery cells with each other or lines connecting the electrical components and/or the battery storage system with an external energy source.

With the battery storage systems, the battery cells may be manually disconnected from electrical components in the electrical component compartment, thereby guaranteeing a safe state for the replacement of the electrical components. Furthermore, the service-disconnected state of the battery cells and/or the electrical components may be completed by disconnecting further connections simultaneously. This may increase the safety of the battery storage system for service and/or maintenance.

According to an embodiment of the invention, one of the mechanical switches is connected between a positive input of the battery cells and electrical components in the electrical component compartment and/or one of the mechanical switches is connected between a negative input of the battery cells and electrical components in the electrical component compartment. The battery cells may be interconnected with each other in parallel and/or in series and may be disconnected from the electrical component compartment by manually actuating the disconnector.

According to an embodiment of the invention, a mechanical switch, which is adapted for interconnecting an electrical component with an input of the battery cells, has a closed position, in which it electrically connects the electrical component with the input, and an opened position, in which it electrically disconnects the electrical component from the input and connects the electrical component with ground. The mechanical switch may be a single pole, double throw switch, i.e. a switch for disconnecting a first pole either with a second pole or with a third pole. The first pole is connected with the electrical components, the second pole with the input of the battery cells and the third pole with ground.

Alternatively, the mechanical switch and also one or more of the other mechanical switches may be single pole, single throw switches.

In this context, the disconnector may be seen as a multi pole switch, which may have single throw or double throw switch components.

According to the invention, the battery cells are connected in a first group and a second group of battery cells, which are galvanically separated in the battery compartment. The groups of battery cells may be battery cell modules, which may be exchangeable as a whole. In each group, the battery cells may be connected in parallel and/or in series. Galvanically separated in the battery compartment may mean that there are no lines and/or switches in the battery compartment, which electrically connect inputs of one group with another group.

It has to be noted that the battery storage system may comprise more than two groups, which are galvanically separated in the battery compartment and/or which are interconnected with each other and/or with the electrical component compartment and/or with the disconnector as described below.

According to an embodiment of the invention, the disconnector is adapted for connecting the first group and the second group. For example, the disconnector may be adapted to split up a battery potential provided by the battery cells into separate branches and/or groups, thereby reducing the voltage category of the complete battery into discreet lower levels. The groups of battery cells may be connected in series via the disconnector. This may reduce electrical risks during service, since the energy content of a group may be lower, such as half the energy content of the battery storage system in the case of two groups.

According to an embodiment of the invention, a first input of the first group and a second input of the second group are connected to one of the mechanical switches, such that the mechanical switch is adapted for connecting and disconnecting the first input and the second input. When the disconnector is actuated, the battery compartment may be isolated from the electrical component compartment and the groups of battery cells may be isolated from each other.

According to the invention, the electrical component compartment comprises an intermediate line for electrically connecting the first group with the second group. This provides the opportunity to connect electrical components between the groups, which electrical components may be accessed outside of the battery compartment. For example, a fuse and/or measurement sensors may be interconnected in the intermediate line.

The disconnector is adapted for electrically connecting the first group with the second group via the intermediate line. For example, the groups may be connected in series via the intermediate line.

One of the mechanical switches is connected between a first input of the first group and the intermediate line and one of the mechanical switches is connected between a second input of the second group and the intermediate line. In such a way, the intermediate line may be isolated from the battery cells and the groups of battery cells may be isolated from each other with the disconnector.

The separation of the battery cells into branches may be realized with looping a battery middle point (or multiple points, for example in a regular interval) via the disconnector to the electrical component compartment. When opening the disconnector, these one or more loops and/or intermediate lines may be opened such that the battery cells are subdivided into independent strings and/or groups with lower energy content. This may result in a reduced effort and/or equipment necessary for the exchange of battery modules.

According to an embodiment of the invention, a mechanical switch, which is adapted for interconnecting the intermediate line with an input of one of the groups, has a closed position, in which it electrically connects the electrical component with the input, and an opened position, in which it electrically disconnects the electrical component from the input and connects the electrical component with ground. As described above, the mechanical switch may be a single pole, double throw switch.

According to an embodiment of the invention, one of the mechanical switches is connected between a positive input of the electrical component compartment and an external electrical energy source and/or one of the mechanical switches is connected between a negative input of the electrical component compartment and the external electrical energy source. The external electrical energy source may be an electrical grid and/or a converter, which is interconnected with the battery storage system. The disconnector may include the disconnection of the inputs and/or terminals of the battery storage system from the line side. The line side inputs and/or terminals may be looped via the disconnector to enable not only a separation of electrical components and battery cells, but also between the battery storage system and the line side.

According to an embodiment of the invention, a mechanical switch, which is adapted for interconnecting an electrical component with an electrical energy source, has a closed position, in which it electrically connects the electrical component with the input, and an opened position, in which it electrically disconnects the electrical component from the input and connects the electrical component with ground. As described above, also this mechanical switch may be a single pole, a single throw and/or double throw switch.

In general, the disconnector may have two states, an operating and/or closed state and a service and/or opened state. In the service state, the disconnector may not only open the contacts but also may directly ground the electrical components in the electrical component compartment and/or the one or more intermediate lines for connecting groups of battery cells.

According to an embodiment of the invention, the disconnector is manually switchable. For example, the disconnector comprises a lever, which may be turned by a service technician between a closed position and an opened position to switch the mechanical switches. Alternatively or additionally, the disconnector may be motor driven.

According to an embodiment of the invention, the battery storage system further comprises a disconnector compartment accommodating the disconnector. Also the disconnector may be arranged inside a compartment, which, for example, also may have a door.

A further aspect of the invention relates to a transportation vehicle, such as an electric car, an electric bus, an electric tram and/or an electric railway vehicle, which comprises a battery storage system as described above and below. The battery storage system may be integrated in the transportation vehicle.

According to an embodiment of the invention, the transportation vehicle comprises a drivetrain, such as one or more electrical motors, suppliable by the battery storage system. For example, the transportation vehicle may be supplied by the battery energy storage system, when no power from an external power source, such as a catenary line, is present.

According to an embodiment of the invention, the transportation vehicle may be suppliable from an electrical grid as energy source during operation of the drive. For example, a train, tram or bus as transportation vehicle may be supplied from an electrical grid, for example via a catenary line. Dependent on the power available, the battery storage system may be charged during operation of the drive.

The transportation vehicle also may be a hybrid train that additionally has a fuel powered engine. In this case, the battery storage system may be charged during braking.

These and other aspects of the invention will be apparent from and elucidated with reference to the embodiments described hereinafter. The invention is defined in the appended claims.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a transportation vehicle according to an embodiment of the invention.
Fig. 2 schematically shows a battery storage system according to an embodiment of the invention.
Fig. 3 schematically shows a battery storage system according to an embodiment of the invention.
Fig. 4 schematically shows a battery storage system according to an embodiment of the invention.
Fig. 5 schematically shows a battery storage system according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

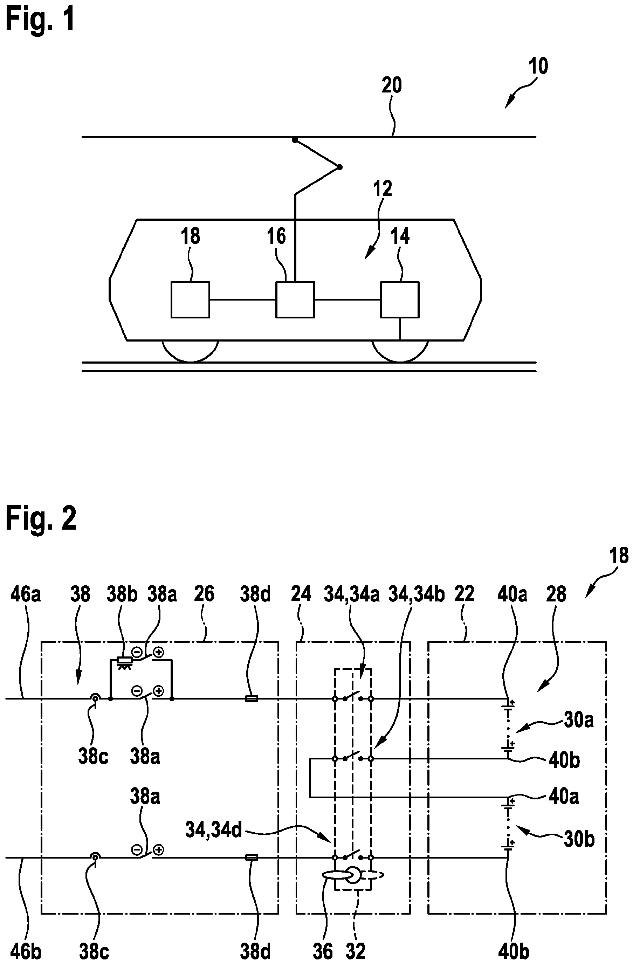

Fig. 1 shows a transportation vehicle 10 in the form of a railway vehicle. In general, the transportation vehicle 10 also may be a street vehicle, such as a bus. The transportation vehicle 10, such as a train or tram, comprises a drivetrain 12 with an electrical motor 14, which drives a wheel of the transportation vehicle 10. The drivetrain 12 furthermore comprises an electrical converter 16, which is adapted for generating an AC current supplied to the electrical motor 14. The converter 16 may be powered from a battery storage system 18 and/or an external electrical energy source 20, such as a catenary line of an AC or DC grid.

It may be that the battery storage system 18 is charged from the external energy source 20 and is then used, when no external energy source 20 is viable, which may be the case at specific sections of the railways. It also may be that the battery storage system 18 is charged during operation of the drivetrain 12 and the electrical motor 14 and/or that the battery storage system 18 supports the external energy source 20, dependent on the availability of power from the external energy source 20.

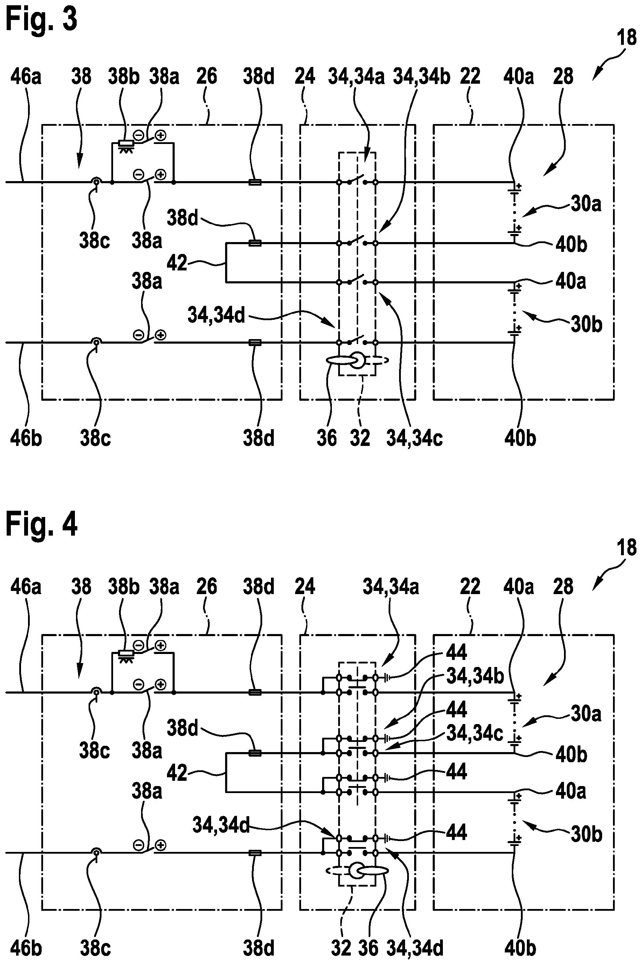

Fig. 3 shows the battery storage system 18 in more detail. The battery storage system comprises a battery compartment 22, a disconnector compartment 24 and an electrical component compartment 26. For example, the compartments 22, 24, 26 may be provided in a cabinet and/or each compartment 22, 24, 26 may have a door for accessing the respective compartment 22, 24, 26, which door protects the interior of the compartments 22, 24, 26 from being touched by a service technician, when the respective door is closed.

The battery compartment 22 accommodates battery cells 28, which may be connected in parallel and/or in series (as shown). The battery cells 28 may be electrically connected into groups 30a, 30b. The battery cells 28 of each group 30a, 30b may be galvanically separated inside the battery compartment 22. In other words, the groups 30a, 30b may be electrically connected with each other solely via lines, which are arranged at least partially outside of the battery compartment 22.

The disconnector compartment 24 accommodates a disconnector 32, which comprises a plurality of mechanical switches 34, 34a, 34b, 34d, which are coupled to be switched simultaneously. The disconnector 32 may be actuated manually and may comprise a lever 36 for doing this. Alternatively, the disconnector 32 may be motor driven. In an opened position of the disconnector 32, all switches 34a, 34b, 34d are open. In a closed position of the disconnector 32, all switches 34a, 34b, 34d are closed. The disconnector compartment 24 may be optional and the disconnector 24 may be arranged outside of the battery compartment and the electrical component compartment 26.

The electrical component compartment 26 accommodates electrical components 38, which, for example, may comprise electrical connectors 38a, a precharging resistor 38b, sensors 38c and fuses 38d.

The electrical components 38 in the electrical component compartment 26 are connected via the disconnector 32 with the battery cells 28. The mechanical switch 34a is connected between a positive input 40a of the battery cells 28 and electrical components 38 in the electrical component compartment 26, which electrical components may be connected with a positive input 46a of the battery storage system 18. The mechanical switch 34d is connected between a negative input 40b of the battery cells 28 and electrical components 38 in the electrical component compartment 26, which electrical components 38 may be connected with a negative input 46b of the battery storage system 18.

In the case of Fig. 2, the disconnector 32 is adapted for connecting the first group 30a and the second group 30b with solely one switch 34b. The negative input 40b of the first group 30a and the positive input 40a of the second group 30b are connected to the mechanical switch 34b, such that the mechanical switch 34a is adapted for connecting and disconnecting the negative input 40b of the first group 30a and the positive input 40a of the second group 30b.

This loop through the disconnector divides the battery cells 28 into two separate groups 30a, 30b with each having half of the potential and half of the energy content. This splitting into groups 30a, 30b of battery cells 28 may be a way to reduce the risk for service personnel. Upon size of the battery compartment 22 and/or a number of battery cells 28, more loops and/or switches 34b may be provided by the disconnector 32 to reduce the battery potential even further.

As shown in Fig. 3, the loop between battery group 30a, 30b may be realized with an intermediate line 42, which is accommodated in the electrical component compartment 26. For example, the intermediate line 42 may be used for performing measurements and/or for interconnecting one or more electrical components 38, such as a fuse 38d and/or other types of components, between the groups 30a, 30b.

In the case of Fig. 3, the intermediate line 42 may be disconnected from the battery cells 28 with two mechanical switches 34b, 34c. The mechanical switch 34b is connected between the negative input 40b of the first group 30a and the intermediate line 42. The mechanical switch 34c is connected between the positive input 40a of the second group 30b and the intermediate line 42.

Fig. 4 shows that the disconnector 32 also may be adapted for grounding the electrical components 38 in the electrical component compartment 26, it is connected to. Every switch 34a to 34d may be a single pole, double throw switch, which either connects the respective electrical component 38 with the battery cells 28 or ground 44. Apart from a physical separation between electrical components 38 and battery cells 28, the electrical components 38 may be grounded.

The closed position of the disconnector 32 may be seen as an operation position and the opened position may be seen as a service position. In the operation position, the positive and negative inputs 40a, 40b of the groups 30a, 30b may connected with each other and with electrical components 38 via the disconnector 32, guaranteeing normal operation and a closed circuit. In the service position, however, the battery cells are galvanically isolated from each other in several groups 30a, 30b. Two or more groups 30a, 30b are possible. All connections of the disconnector to electrical components 38 in the electrical component compartment 26 may be directly grounded via the disconnector 32.

The mechanical switches 34a, 34b, which are adapted for interconnecting an electrical component 38 with an input 40a, 40b of the battery cells 28, may have a closed position, in which they electrically connect the electrical component 38 with the respective input 40a, 40b, and an opened position, in which they electrically disconnect the electrical component 38 from the respective input 40a, 40b and connect the electrical component with ground 44.

Also, the mechanical switches 34b, 34c, which are adapted for interconnecting the intermediate line 42 with an input 40a, 40b of one of the groups 30a, 30b, may have a closed position, in which they electrically connect the electrical component 38 with the respective input 40a, 40b, and an opened position, in which they electrically disconnect the electrical component 38 from the respective input 40a, 40b and connect the electrical component 38 with ground 44.

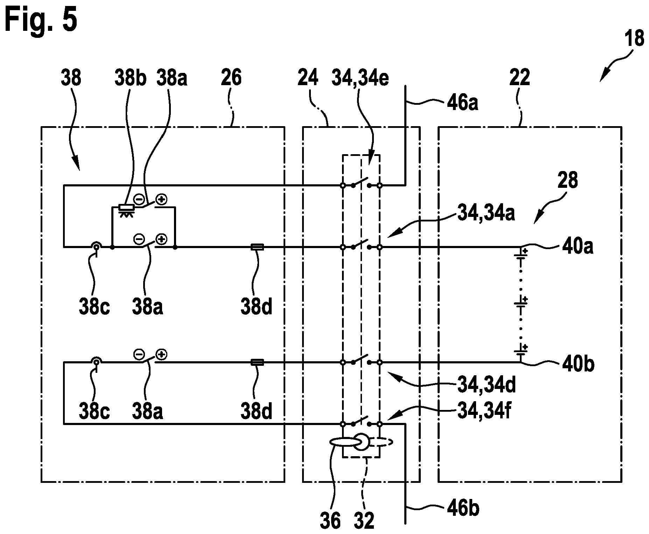

Fig. 5 shows, that the disconnector 32 may also provide a separation of battery storage system 18 from an external energy source, such as the converter 16 and/or the electrical grid 20. The disconnector 32 may be adapted for disconnecting line side inputs 46a, 46b from electrical components 38 of the electrical component compartment 26.

The mechanical switch 34e may be connected between the positive input 46a of the electrical component compartment 26 and an external electrical energy source 16, 20. The mechanical switch 34f may be connected between a negative input 46b of the electrical component compartment 26 and the external electrical energy source 16, 20.

It has to be noted that Fig. 5 may be combined with Fig. 2, 3 and 4. The switches 34e, 34f may be single pole, single throw and/or two throw switches. Furthermore, the battery cells 28 may be divided into groups 30a, 30b.

The mechanical switches 34e, 34f, which are adapted for interconnecting an electrical component 38 via an input 46a, 46b of the battery storage system 18 with an electrical energy source 16, 20, may have a closed position, in which they electrically connect the electrical component 38 with the respective input 46a, 46b, and an opened position, in which they electrically disconnect the electrical component 38 from the respective input 46a, 46b and connect the electrical component 38 with ground 44.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope. The invention is limited by the appended claims.

### LIST OF REFERENCE SYMBOLS

- 10: transportation vehicle
- 12: drive
- 14: electrical motor
- 16: electrical converter
- 18: battery storage system
- 20: external electrical energy source
- 22: battery compartment
- 24: disconnector compartment
- 26: electrical component compartment
- 28: battery cells
- 30a: group
- 30b: group
- 32: disconnector
- 34: mechanical switch
- 34a: mechanical switch
- 34b: mechanical switch
- 34c: mechanical switch
- 34d: mechanical switch
- 34e: mechanical switch
- 34f: mechanical switch
- 36: lever
- 38: electrical component
- 38a: connector
- 38b: recharging resistor
- 38c: sensor
- 38d: fuse
- 40a: positive input
- 40b: negative input
- 42: intermediate line
- 44: ground

## Claims

1. A battery storage system (18), comprising:
a battery compartment (22) accommodating a plurality of battery cells (28);
an electrical component compartment (26) accommodating electrical components (38) electrically connectable with the battery cells (28);
a disconnector (32) for electrically connecting the electrical components (38) to the battery cells (28) and for electrically disconnecting the electrical components (38) from the battery cells (28);
wherein the disconnector (32) comprises at least three mechanical switches (34), which are coupled with each other to be switched simultaneously;
wherein the battery cells (28) are connected in a first group (30a) and a second group (30b) of battery cells (28), which are galvanically separated in the battery compartment (22);
wherein the electrical component compartment (26) accommodates an intermediate line (42) for electrically connecting the first group (30a) with the second group (30b);
wherein one of the mechanical switches (34b) is connected between a first input (40b) of the first group (30a) and the intermediate line (42);
wherein one of the mechanical switches (34c) is connected between a second input (40a) of the second group (30b) and the intermediate line (42).

2. The battery storage system (18) of claim 1,
wherein one of the mechanical switches (34a) is connected between a positive input (40a) of the battery cells (28) and electrical components (38) in the electrical component compartment (26);
wherein one of the mechanical switches (34d) is connected between a negative input (40b) of the battery cells (28) and electrical components (38) in the electrical component compartment (26).

3. The battery storage system (18) of claim 1 or 2,
wherein a mechanical switch (34a, 34b), which is adapted for interconnecting an electrical component (38) with an input (40a, 40b) of the battery cells (28), has a closed position, in which it electrically connects the electrical component (38) with the input (40a, 40b), and an opened position, in which it electrically disconnects the electrical component (38) from the input (40a, 40b) and connects the electrical component with ground (44).

4. The battery storage system (18) of one of the previous claims,
wherein a mechanical switch (34b, 34c), which is adapted for interconnecting the intermediate line (42) with an input (40a, 40b) of one of the groups (30a, 30b), has a closed position, in which it electrically connects the electrical component (38) with the input (40a, 40b), and an opened position, in which it electrically disconnects the electrical component (38) from the input (40a, 40b) and connects the electrical component (38) with ground (44).

5. The battery storage system (18) of one of the previous claims,
wherein one of the mechanical switches (34e) is connected between a positive input (46a) of the electrical component compartment (26) and an external electrical energy source (16, 20);
wherein one of the mechanical switches (34f) is connected between a negative input (46b) of the electrical component compartment (26) and the external electrical energy source (16, 20).

6. The battery storage system (18) of one of the previous claims,
wherein a mechanical switch (34e, 34f), which is adapted for interconnecting an electrical component (38) via an input (46a, 46b) of the battery storage system (18) with an electrical energy source (16, 20), has a closed position, in which it electrically connects the electrical component (38) with the input (46a, 46b), and an opened position, in which it electrically disconnects the electrical component (38) from the input (46a, 46b) and connects the electrical component (38) with ground (44).

7. The battery storage system (18) of one of the previous claims,
wherein the disconnector (32) is manually switchable and/or motor driven.

8. The battery storage system (18) of one of the previous claims, further comprising a disconnector compartment (24) accommodating the disconnector (32).

9. A transportation vehicle (10), comprising:
the battery storage system (18) according to one of the previous claims;
a drivetrain (12) suppliable by the battery storage system (18).

10. The transportation vehicle (10) of claim 9,
wherein the transportation vehicle (10) is suppliable from an electrical grid (20) as energy source during operation of the drivetrain (12).

## Patentansprüche

1. Batteriespeichersystem (18), das Folgendes umfasst:
ein Batteriefach (22), das mehrere Batteriezellen (28) aufnimmt;
ein Fach (26) für elektrische Komponenten, das elektrische Komponenten (38) aufnimmt, die mit den Batteriezellen (28) elektrisch verbunden werden können;
einen Trennschalter (32), um die elektrischen Komponenten (38) mit den Batteriezellen (28) elektrisch zu verbinden und um die elektrischen Komponenten (38) von den Batteriezellen (28) elektrisch zu trennen;
wobei der Trennschalter (32) wenigstens drei mechanische Schalter (34) umfasst, die so miteinander gekoppelt sind, dass sie gleichzeitig geschaltet werden;
wobei die Batteriezellen (28) in einer ersten Gruppe (30a) und einer zweiten Gruppe (30b) von Batteriezellen (28) verbunden sind, die in dem Batteriefach (22) galvanisch getrennt sind;
wobei das Fach (26) für elektrische Komponenten eine dazwischen liegende Leitung (42) zum elektrischen Verbinden der ersten Gruppe (30a) mit der zweiten Gruppe (30b) aufnimmt;
wobei einer der mechanischen Schalter (34b) zwischen einem ersten Eingang (40b) der ersten Gruppe (30a) und der dazwischen liegenden Leitung (42) angeschlossen ist;
wobei einer der mechanischen Schalter (34c) zwischen einem zweiten Eingang (40a) der zweiten Gruppe (30b) und der dazwischen liegenden Leitung (42) angeschlossen ist.

2. Batteriespeichersystem (18) nach Anspruch 1,
wobei einer der mechanischen Schalter (34a) zwischen einem positiven Eingang (40a) der Batteriezellen (28) und elektrischen Komponenten (38) in dem Fach (26) für elektrische Komponenten angeschlossen ist;
wobei einer der mechanischen Schalter (34d) zwischen einem negativen Eingang (40b) der Batteriezellen (28) und elektrischen Komponenten (38) in dem Fach (26) für elektrische Komponenten angeschlossen ist.

3. Batteriespeichersystem (18) nach Anspruch 1 oder 2,
wobei ein mechanischer Schalter (34a, 34b), der ausgelegt ist, eine elektrische Komponente (38) mit einem Eingang (40a, 40b) der Batteriezellen (28) zu verbinden, eine geschlossene Position hat, in der er die elektrische Komponente (38) mit dem Eingang (40a, 40b) elektrisch verbindet, und eine offene Position hat, in der er die elektrische Komponente (38) von dem Eingang (40a, 40b) elektrisch trennt und die elektrische Komponente mit Masse (44) verbindet.

4. Batteriespeichersystem (18) nach einem der vorhergehenden Ansprüche,
wobei ein mechanischer Schalter (34b, 34c), der ausgelegt ist, die dazwischen liegende Leitung (42) mit einem Eingang (40a, 40b) von einer der Gruppen (30a, 30b) zu verbinden, eine geschlossene Position hat, in der er die elektrische Komponente (38) mit dem Eingang (40a, 40b) verbindet, und eine offene Position hat, in der er die elektrische Komponente (38) von dem Eingang (40a, 40b) elektrisch trennt und die elektrische Komponente (38) mit Masse (44) verbindet.

5. Batteriespeichersystem (18) nach einem der vorhergehenden Ansprüche,
wobei einer der mechanischen Schalter (34e) zwischen einem positiven Eingang (46a) des Fachs (26) für elektrische Komponenten und einer externen Quelle (16, 20) für elektrische Energie angeschlossen ist;
wobei einer der mechanischen Schalter (34f) zwischen einem negativen Eingang (46b) des Fachs (26) für elektrische Komponenten und der externen Quelle (16, 20) für elektrische Energie angeschlossen ist.

6. Batteriespeichersystem (18) nach einem der vorhergehenden Ansprüche,
wobei ein mechanischer Schalter (34e, 34f), der ausgelegt ist, eine elektrische Komponente (38) über einen Eingang (46a, 46b) des Batteriespeichersystems (18) mit einer Quelle (16, 20) für elektrische Energie zu verbinden, eine geschlossene Position hat, in der er die elektrische Komponente (38) mit dem Eingang (46a, 46b) elektrisch verbindet, und eine offene Position hat, in der er die elektrische Komponente (38) von dem Eingang (46a, 46b) elektrisch trennt und die elektrische Komponente (38) mit Masse (44) verbindet.

7. Batteriespeichersystem (18) nach einem der vorhergehenden Ansprüche,
wobei der Trennschalter (32) manuell geschaltet werden kann und/oder motorgetrieben ist.

8. Batteriespeichersystem (18) nach einem der vorhergehenden Ansprüche, das ferner ein Trennschalterfach (24) umfasst, das den Trennschalter (32) aufnimmt.

9. Transportfahrzeug (10), das Folgendes umfasst:
das Batteriespeichersystem (18) nach einem der vorhergehenden Ansprüche;
einen Antrieb (12), der durch das Batteriespeichersystem (18) versorgt werden kann.

10. Transportfahrzeug (10) nach Anspruch 9,
wobei das Transportfahrzeug (10) aus einem Stromnetz (20) als Energiequelle während des Betriebs des Antriebs (12) versorgt werden kann.

## Revendications

1. Système de stockage sur batterie (18), comprenant :
un compartiment de batterie (22) recevant une pluralité d'éléments de batterie (28) ;
un compartiment de composants électriques (26) recevant des composants électriques (38) pouvant être connectés électriquement aux éléments de batterie (28) ;
un sectionneur (32) destiné à connecter électriquement les composants électriques (38) aux éléments de batterie (28) et à déconnecter électriquement les composants électriques (38) des éléments de batterie (28) ;
dans lequel le sectionneur (32) comprend au moins trois commutateurs mécaniques (34) qui sont reliés les uns aux autres pour être commutés simultanément ;
dans lequel les éléments de batterie (28) sont connectés dans un premier groupe (30a) et un deuxième groupe (30b) d'éléments de batterie (28) qui sont séparés galvaniquement dans le compartiment de batterie (22) ;
dans lequel le compartiment de composants électriques (26) contient une ligne intermédiaire (42) destinée à connecter électriquement le premier groupe (30a) au deuxième groupe (30b) ;
dans lequel l'un des commutateurs mécaniques (34b) est connecté entre une première entrée (40b) du premier groupe (30a) et la ligne intermédiaire (42) ;
dans lequel l'un des commutateurs mécaniques (34c) est connecté entre une deuxième entrée (40a) du deuxième groupe (30b) et la ligne intermédiaire (42).

2. Système de stockage sur batterie (18) selon la revendication 1,
dans lequel l'un des commutateurs mécaniques (34a) est connecté entre une entrée positive (40a) des éléments de batterie (28) et des composants électriques (38) dans le compartiment de composants électriques (26) ;
dans lequel l'un des commutateurs mécaniques (34d) est connecté entre une entrée négative (40b) des éléments de batterie (28) et des composants électriques (38) dans le compartiment de composants électriques (26).

3. Système de stockage sur batterie (18) selon la revendication 1 ou 2,
dans lequel un commutateur mécanique (34a, 34b), qui est conçu pour interconnecter un composant électrique (38) avec une entrée (40a, 40b) des éléments de batterie (28), présente une position fermée dans laquelle il connecte électriquement le composant électrique (38) à l'entrée (40a, 40b), et une position ouverte dans laquelle il déconnecte électriquement le composant électrique (38) de l'entrée (40a, 40b) et connecte le composant électrique à la terre (44).

4. Système de stockage sur batterie (18) selon l'une des revendications précédentes,
dans lequel un commutateur mécanique (34b, 34c), qui est conçu pour interconnecter la ligne intermédiaire (42) avec une entrée (40a, 40b) de l'un des groupes (30a, 30b), présente une position fermée dans laquelle il connecte électriquement le composant électrique (38) à l'entrée (40a, 40b), et une position ouverte dans laquelle il déconnecte électriquement le composant électrique (38) de l'entrée (40a, 40b) et connecte le composant électrique (38) à la terre (44).

5. Système de stockage sur batterie (18) selon l'une des revendications précédentes,
dans lequel l'un des commutateurs mécaniques (34e) est connecté entre une entrée positive (46a) du compartiment de composants électriques (26) et une source d'énergie électrique externe (16, 20) ;
dans lequel l'un des commutateurs mécaniques (34f) est connecté entre une entrée négative (46b) du compartiment de composants électriques (26) et la source d'énergie électrique externe (16, 20).

6. Système de stockage sur batterie (18) selon l'une des revendications précédentes,
dans lequel un commutateur mécanique (34e, 34f), qui est conçu pour interconnecter un composant électrique (38) via une entrée (46a, 46b) du système de stockage sur batterie (18) avec une source d'énergie électrique (16, 20), présente une position fermée dans laquelle il connecte électriquement le composant électrique (38) à l'entrée (46a, 46b), et une position ouverte dans laquelle il déconnecte électriquement le composant électrique (38) de l'entrée (46a, 46b) et connecte le composant électrique (38) à la terre (44).

7. Système de stockage sur batterie (18) selon l'une des revendications précédentes,
dans lequel le sectionneur (32) est commutable manuellement et/ou entraîné par moteur.

8. Système de stockage sur batterie (18) selon l'une des revendications précédentes, comprenant en outre un compartiment de sectionneur (24) recevant le sectionneur (32) .

9. Véhicule de transport (10), comprenant :
le système de stockage sur batterie (18) selon l'une des revendications précédentes ;
un groupe motopropulseur (12) alimenté par le système de stockage sur batterie (18).

10. Véhicule de transport (10) selon la revendication 9, dans lequel le véhicule de transport (10) peut être alimenté par un réseau électrique (20) en tant que source d'énergie pendant le fonctionnement du groupe motopropulseur (12).
